# EUROPEAN PATENT APPLICATION

(11) **EP 4 443 278 A1**
(43) Date of publication of application: **09.10.2024**
(21) Application number: 24708113.6
(22) Date of filing: 16.02.2024
(51) Int. Cl.: G06F 3/041

(54) **ELECTRONIC DEVICE AND CONTROL METHOD FOR CONFIGURING TOUCH COORDINATES ON EDGE AREA**

(30) Priority: 20.02.2023 KR 20230022374; 04.04.2023 KR 20230044240
(71) Applicant: Samsung Electronics Co., Ltd., Suwon-si, Gyeonggi-do 16677 (KR)
(72) Inventor: KIM, Seonghun, Suwon-si, Gyeonggi-do 16677 (KR); KIM, Mingyu, Suwon-si, Gyeonggi-do 16677 (KR); WOO, Kwangtaek, Suwon-si, Gyeonggi-do 16677 (KR); AN, Jinwan, Suwon-si, Gyeonggi-do 16677 (KR); CHOI, Jaeho, Suwon-si, Gyeonggi-do 16677 (KR)
(74) Representative: HGF
(86) International application number: PCT/KR2024/002143
(87) International publication number: WO 2024/177337

(57) **Abstract**

An electronic device and control method for setting touch coordinates of an edge area are disclosed. An electronic device comprises a touch display, a sensor, and at least one processor. The at least one processor, configured to acquires, using the sensor, information on a grip area corresponding to a side of the electronic device which is gripped, identify information of a major axis of a detected touch event when the touch event is detected in an edge area of side of the electronic device other than the gripped side among a plurality of edge areas set for the touch display, and set coordinates of the detected touch event based on the information of the major axis of the detected touch event and a preset length of the major axis.

## Description

### [Technical Field]

Various embodiments of this document relate to an electronic device, for example, an electronic device that sets up coordinates of a touch event with respect to an edge area of a touch display.

### [Background Art]

An electronic device including a touch display may perform an operation by detecting a user's touch input on a display surface. The touch display may detect a change in pressure or capacitance caused by a user's touch using a matrix-type internal circuit, and may recognize a touch point by acquiring coordinates of the detected point.

Since coordinates of the center area of the touch display are obtained using two horizontal lines and two vertical lines around the touch point, the touch display can accurately recognize the touch point. However, due to the structure of the touch display, circuit lines cannot be arranged in a corner area. Accordingly, since the coordinates of the touch generated in the edge area of the touch display are acquired by a total of three lines, the touch display tends to have difficulty in recognizing the exact coordinates.

### [Disclosure of Invention]

### [Technical Problem]

Various embodiments of the present document may correct errors in touch input coordinates of an edge area.

### [Solution to Problem]

An electronic device according to various embodiments of this document may comprise a touch display, a sensor, and at least one processor. The at least one processor may acquire, using the sensor, information on a grip area corresponding to a side of the electronic device which is gripped. The at least one processor may identify information of a major axis of a detected touch event when the touch event is detected in an edge area of a side of the electronic device other than the gripped side among a plurality of edge areas set for the touch display. The at least one processor may set coordinates of the detected touch event based on the information of the major axis of the detected touch event, and a preset length of the major axis.

The at least one processor may identify a length of the major axis comprised in the information of the major axis and a length of a minor axis of the detected touch event when the touch event is detected in the edge area of the side other than the gripped side. The at least one processor may set the coordinates of the detected touch event based on the length of the major axis, the length of the minor axis and the preset length or identify a gradient of the detected touch event based on the information of the major axis. The at least one processor, when the determined gradient is within a preset angular range, may set the coordinates of the detected touch event based on the preset length of the major axis

The at least one processor may set the coordinates of the detected touch event based on the preset length of the major axis when a ratio of the length of the major axis to the length of the minor axis is greater than or equal to a preset ratio.

The gradient may set to a different range based on the information on the grip area and a location of the edge area where the touch event is detected.

The at least one processor may set the length of the major axis of the detected touch event as the preset length of the major axis. The at least one processor may set the coordinates in a direction of the major axis of the touch event based on the preset length of the major axis.

The at least one processor may identify the length of the major axis of the detected touch event based on an end of the major axis located at the farthest point from the side of the electronic device corresponding to the edge area.

The preset length includes an average length of the major axis of at least one other touch event detected in one or more areas other than the edge area, a length of a major axis of another touch event detected in an area, other than the edge area, immediately before the touch event is detected in the edge area, or a length set by a user.

The at least one processor may receive a plurality of thumb touch events. The at least one processor may acquire an average length of the major axes of each of the thumb touch events. The at least one processor may set the acquired average length of the major axis to the preset length of the major axis.

The at least one processor may identify a central point of an area formed by the major axis and a minor axis of the detected touch event as the coordinates of the detected touch event. The at least one processor may update the identified coordinates of the detected touch event based on the preset length of the major axis. The at least one processor may set the corrected coordinates of the touch event as the coordinates of the detected touch event.

The sensor may include at least one of a grip sensor, a temperature sensor, and a touch sensor. The at least one processor may acquire the information on the grip area based on at least one of grip information detected by the grip sensor, temperature information of the touch display detected by the temperature sensor, and information on an area touched on the touch display detected by the touch sensor.

A method for controlling an electronic device according to various embodiments of this document may comprise acquiring information on a grip area corresponding to a side of the electronic device which is gripped. The control method may comprise identifying information of a major axis of a detected touch event when the touch event is detected in an edge area of a side of the electronic device other than the gripped side among a plurality of edge areas set for a touch display. The control method may comprise setting coordinates of the detected touch event based on the information of the major axis of the detected touch event, and a preset length of the major axis.

The control method may comprise identifying a length of the major axis comprised in the information of the major axis and a length of a minor axis of the detected touch event when the touch event is detected in the edge area of the side other than the gripped side. The setting the coordinates of the detected touch event may comprise setting the coordinates of the detected touch event based on the length of the major axis, the length of the minor axis and the preset length, or identifying a gradient of the detected touch event based on the information of the major axis. The setting the coordinates of the detected touch event may comprise, when the determined gradient is within a preset angular range, may set the coordinates of the detected touch event based on the preset length of the major axis.

The setting the coordinates of the detected touch event may comprise setting the coordinates of the detected touch event based on the preset length of the major axis when a ratio of the length of the major axis to the length of the minor axis is greater than or equal to a preset ratio.

The gradient may be set to a different range based on the information on the grip area and a location of the edge area where the touch event is detected.

The setting the coordinates of the detected touch event may comprise setting the length of the major axis of the detected touch event to the preset length of the major axis. The setting the coordinates of the detected touch event may comprise setting the coordinates in a direction of the major axis of the touch event based on the preset length of the major axis.

### [Brief Description of Drawings]

FIG. 1 is a block diagram illustrating an electronic device within a network environment according to various embodiments.
FIG. 2 is a block diagram illustrating a configuration of an electronic device according to various embodiments.
FIG. 3 is a block diagram illustrating a configuration of an electronic device performing an identification operation of touch coordinates according to various embodiments.
FIG. 4 is a diagram illustrating an operation of identifying a grip area by an electronic device according to various embodiments.
FIG. 5 is a diagram illustrating an edge area according to various embodiments.
FIG. 6 is a diagram illustrating various embodiments of performing a coordinate correction process.
FIG. 7 is a diagram illustrating various embodiments of determining touch coordinates of an edge area.
FIG. 8 is a diagram illustrating various embodiments of correcting touch coordinates of an edge area.
FIG. 9 is a diagram illustrating a touch area according to various embodiments.
FIG. 10 is a diagram illustrating various types of touch areas that vary on the basis of a distance from a grip area according to various embodiments.
FIG. 11 is a flowchart illustrating a method for controlling an electronic device according to various embodiments.
FIG. 12 is a flowchart illustrating a process of correcting touch coordinates according to various embodiments.

### [Mode for the Invention]

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B,", "A and/or B", "at least one of A or B," "A, B, or C,", "A, B and/or C", "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it denotes that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Hereinafter, various embodiments of this document may be described with reference to the accompanying drawings.

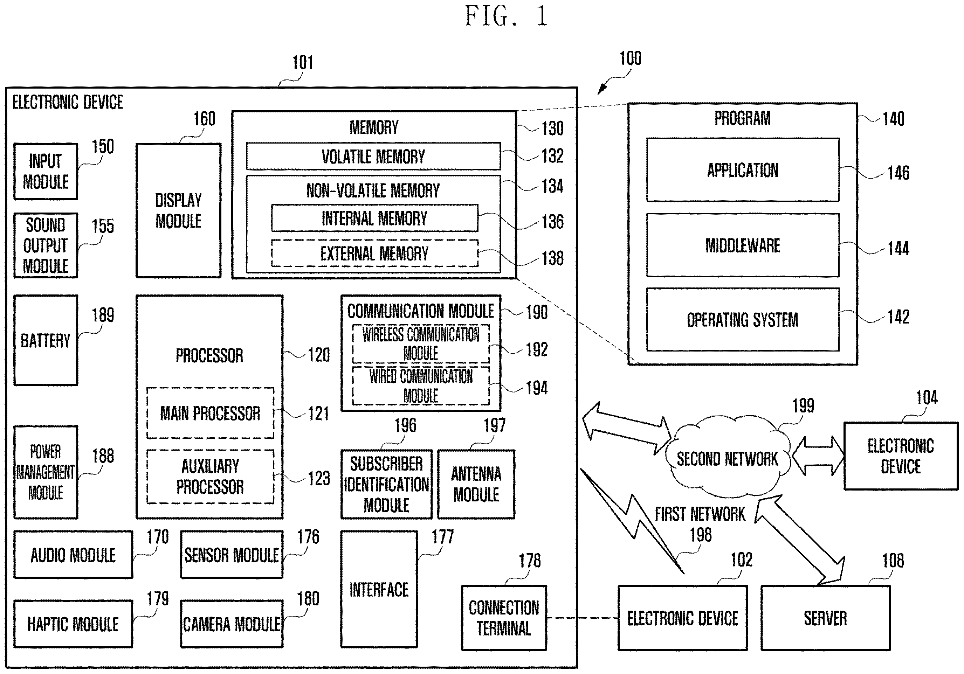

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module(SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory may include at least one of an internal memory 136 and an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices (e.g. electronic devices 102 and 104 or the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

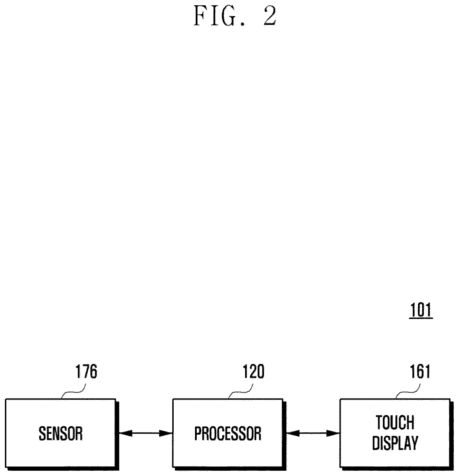

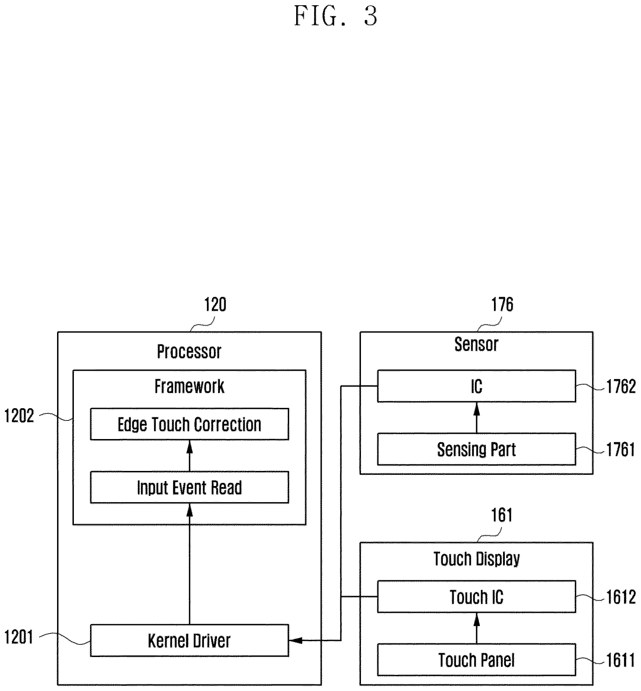

FIG. 2 is a block diagram illustrating a configuration of an electronic device 101 according to various embodiments, and FIG. 3 is a block diagram illustrating a configuration of an electronic device performing an identification operation of touch coordinates according to various embodiments. Descriptions will be made with reference to FIGS. 2 and 3 together.

With reference to FIG. 2, the electronic device 101 may include a sensor 176, a processor 120, and a touch display 161. In an example, the sensor 176 may be part of or combined with the touch display 161.

The sensor 176 may detect whether or not the user grips. For example, the sensor 176 may be configured to detect whether or not a user grips the electronic device 101 and, if so, a side (e.g. a side surface or a rear surface) of the electronic device 101 being gripped, and optionally a specific area, or part, of the side being gripped. For example, the electronic device 101 may include at least one of a grip sensor, a temperature sensor, and a touch sensor. The electronic device 101 may detect a user's grip, a change in temperature, and/or a touch area on a display surface according to the type of included sensors. The sensor 176 may be disposed on at least one of a side surface, rear surface, or touch display surface of the electronic device 101, and one or more sensors 176 may be disposed in the electronic device 101. The sensor 176 may be referred to as a sensor module, a sensor unit, or a sensor device.

In one embodiment, the sensor 176 may include a sensing unit 1761 and an integrated circuit (IC) 1762. The sensing unit 1761 may detect a user's grip motion, and the integrated circuit 1762 may transmit the data sensed by the sensing unit 1761 to the processor 120.

The touch display 161 may display an image signal processed by the processor 120 and may detect a user's touch area and perform a corresponding operation. Also, the touch display 161 may detect a touch event on a set edge area. The edge area may be a certain area set in the top, bottom, left, and/or right corner areas of the touch display 161 (or a combination thereof). In one embodiment, the touch display 161 may include a touch panel 1611 comprising a touch sensor and a touch integrated circuit 1612. The touch panel 1611 may detect a user's touch motion. The touch integrated circuit 1612 may transmit the data detected by the touch panel 1611 to the processor 120. In one embodiment, the touch display 161 may serve as a touch sensor without a separate sensor. For example, a touch event may be the result of recognizing a change in capacitance (or, a change in electric charge) as a user input when a change in capacitance occurs in response to a user's input on the touch panel 1611 including a touch sensor.

The processor 120 may control each component of the electronic device 101. For example, the processor 120 may control the sensor 176 to detect whether or not the user grips. Also, the processor 120 may acquire information on a grip area in which one side of the electronic device is gripped. The grip area information may include information on the gripped side of the electronic device 101. Alternatively, the grip area information may include location information and/or area information of the gripped area.

When the processor 120 acquires grip area information and detects a touch event on an edge area of another side except for the edge area of one side among the edge areas set in the touch display 161, the lengths of the major and minor axes of the detected touch event may be identified. For example, when the processor 120 acquires grip area information corresponding to a gripped side of the electronic device 101 and detects a touch event on an edge area of another side of the electronic device (i.e., a different side to the gripped side), where this edge area of the other side may be among a plurality of edge areas set for the touch display 161 (e.g., a certain area set in the top, bottom, left, and/or right corner areas of the touch display 161), the processor 120 may identify the lengths of the major axis and minor axis of the detected touch event (e.g., the longest length from one side of the touch area to another side of the touch area, and the shortest length from one side of the touch area to another side of the touch area). In an embodiment, information on the long axis may include information on one end (e.g., starting point) of the long axis and/or length (e.g., the longest length from one side of the touch area to the other side of the touch area). Information on the short axis may include information on one end (e.g., starting point) of the short axis and/or information on the length (e.g., the shortest length from one side of the touch area to the other side of the touch area).

Also, the processor 120 may set (e.g. correct or update) coordinates of the touch event on the basis of information related to the detected touch event. Information related to the touch event may include a length of a major axis of the touch event, a length of a minor axis of the touch event, and/or a gradient of an area formed by the major axis and the minor axis. For example, the area inputted the touch (e.g., touch area) may include a certain angle (including 0 degrees) with respect to the horizontal axis and may be formed as an oval with a horizontal axis longer than the vertical axis. The touch sensor of the touch display 161 (or the touch panel 1611) may detect a touch area formed in an oval shape. The processor 120 may determine the tilt based on the angle between the long axis (e.g., horizontal axis) of the touch sensor and the long axis of the oval-shaped touch area. The major and minor axes of this document may be different from the major and minor axes of the touch area. For example, the major and minor axes of this document may be the major and minor axes related to the touch area recognized by the touch sensor.

The processor 120 may set the coordinates of the touch event when the length of the major axis is greater than or equal to a preset ratio with respect to the length of the minor axis. In one embodiment, a ratio of a length of a major axis to a length of a minor axis of a thumb touch event may be generally 1.2 to 3.0. Accordingly, in one example the initial value, or range, of the preset ratio may be set to a value, or range, of 1.2 to 3.0. The initial value of the preset ratio is not limited thereto and may be in a similar range or a different range altogether. In addition, in various examples the processor 120 may learn the ratio of touch event by the user's thumb and change the initial ratio to an optimal ratio. For example, when the processor 120 initially operates, the processor 120 may display a measurement-related UI or operate a program to determine various shapes and sizes of a touch event by a user's thumb. In one embodiment, the processor 120 displays a guide (e.g., for the user to follow) for receiving (e.g., for a user to make, input, provide etc.) a thumb touch event in various shapes and angles, and may change the initial ratio of the length of the major axis to the length of the minor axis to an optimal ratio (e.g., a user-specific ratio or a personalized ratio) according to the user on the basis of the thumb touch event input on the guide. The processor 120 may receive a touch event by a user's thumb several times or dozens of times for learning (e.g., a predetermined number of times, or more). In other words, the processor 120 may recognize that a touch event by the user's thumb has been received by considering the length of the major axis and minor axis of the touch input. Also, the processor 120 may acquire an average length of the major axes of the thumb touch event input a plurality of times, and set the acquired average length of the major axis to a preset length of the major axis. Also, the processor 120 may store the set length of the major axis in the memory 130. Alternatively, in the case where the initial length of the major axis is included (e.g. a default length), the processor 120 may change the initial length of the major axis to the acquired average length of the major axis. Alternatively, the processor 120 may set the coordinates of the touch event on the basis of the ratio of the major axis to the minor axis of the touch event and the gradient of the touch event, but optionally or alternatively, the processor 120 may set the coordinates using only the ratio of the major axis to the minor axis of the touch event or set the coordinates using only the gradient of the touch event. For example, the processor 120 may correct or update coordinates by considering both factors (ratio and gradient) or change settings to set the coordinates by considering one factor (ratio or gradient), depending on a manufacturer's or user's selection. Alternatively, when there is a defect in the thumb, the processor 120 may deactivate the coordinate correction function of the touch event using the ratio of the length of the major axis to the length of the minor axis according to the user's input command. In this case, the processor 120 may set the touch event coordinates using the gradient of the touch event. The processor 120 may correct the coordinates of the touch event if the gradient is within a preset angular range. The gradient range for correcting, or updating, the coordinates may be set differently depending on a grip area, a location of an edge area where the touch event is detected, and/or whether the thumb is left or right. For example, a preset angular range may be within a range that can maximally reach an edge area other than the edge area gripped in the + angular direction with the right thumb. The initial value of the preset angle may be set to 0 to 90 degrees. Alternatively, in the case of the left thumb, a preset angular range may be set to 90 to 0 degrees or 0 to -90 degrees. The above example is one embodiment, and if the angular range for the left thumb and the angular range for the right thumb may be distinguished, the angular range may be set to various values. Meanwhile, since the angle of the touch event area may vary depending on the user, the set angle may be optimized through learning.

Alternatively or additionally, the processor 120 may identify a central point of an area formed by the major and minor axes of the touch event as the coordinates of the touch event. Also, the processor 120 may correct (or update, determine, set etc.) the coordinates of the identified touch event on the basis of a preset length of the major axis. The processor 120 may set the corrected/updated coordinates of the touch event as coordinates of the detected touch event. The coordinate setting process described below may be applied to both a process of setting coordinates without determining the coordinates and a process of determining coordinates and correcting (or updating) the determined coordinates.

When a grip is detected on one side and a touch event is detected in an edge area of another side except for the edge area of the one side, the processor 120 may set coordinates of the touch event. When a grip is detected on one side of the electronic device 101 and a touch event is detected on an edge area on the other side at the same time, the processor 120 may judge (e.g., determine, detect, identify, ascertain etc.) that the user operates with one hand. Further, the processor 120 may judge (e.g., determine, detect, identify, ascertain etc.) that a touch event on the edge area of the other side detected while the user is operating with one hand is a thumb touch event. The processor 120 may set the coordinates of the touch event detected in the edge area when it is judged that the operation is performed by one hand and the touch event is caused by the thumb. For example, when the electronic device 101 simultaneously detects a grip and a touch event on an edge area on the other side, it may judge (e.g., determine, detect, identify, ascertain etc.) that the touch event on the edge area is a thumb touch event. Also, the electronic device 101 may judge (e.g., determine, detect, identify, ascertain etc.) a thumb touch event in consideration of a ratio of a major axis and minor axis of the touch event with respect to an edge area. In one embodiment, when a preset ratio is 1.5, the electronic device 101 may judge (e.g., determine, detect, identify, ascertain etc.) a detected touch event as a thumb touch event when the ratio of the major axis to the minor axis of the detected touch event is 1.5 or more. Alternatively, the electronic device 101 may judge (e.g., determine, detect, identify, ascertain etc.) a thumb touch event in consideration of a gradient of the touch event with respect to an edge area. In one embodiment, in the case where a gradient of a thumb touch event is set to 0 to 50 degrees, the electronic device 101 may determine the detected touch event as a thumb touch event when the gradient of the detected touch event is within the set range. The electronic device 101 may judge (e.g., determine, detect, identify, ascertain etc.) whether a thumb touch event occurs in consideration of a ratio of a major axis to a minor axis of a touch event and/or a gradient of the touch event in addition to detecting a grip and the touch event on an edge area.

For example, the processor 120 may obtain the information of the major axis of a touch event. The information of the major axis may include information on one end (e.g., starting point) of the major axis and/or information on length. In one embodiment, the processor 120 may replace a length of a major axis of a touch event with a preset length of the major axis based on the obtained information on the length of the major axis. In one embodiment, the processor 120 may replace the major axis of a touch event with the preset major axis based on the obtained information on one end of the major axis. The processor 120 set coordinates in the major axis direction on the basis of the replaced preset length of the major axis. The processor 120 may replace the length of the major axis of the detected touch event with a preset length of the major axis on the basis of an end in the inner direction of the touch display 161 (or the farthest end from the corner) of both ends in the major axis direction of the detected touch event. That is, the length of the major axis may be identified based on identifying the end of the major axis farthest from the edge of the touch screen 160 (e.g., the edge corresponding to the edge area to which the touch event corresponds), and replacing the length of the major axis with the preset length may be performed based on the identified length of the major axis. Also, the processor 120 may set the coordinates of the detected touch event. For example, a preset length of a major axis may include an average length of the major axis of the touch event detected in areas other than the edge area, the length of the major axis of the touch event detected in other areas immediately before the touch event is detected in the edge area, a length of the major axis of the touch event learned by the processor 120 through requesting a user provide inputs using a guide, or the length of the major axis set by the user.

In one embodiment, the processor 120 may include a kernel driver 1201 and a framework 1202. The kernel driver 1201 may receive data from the touch display 161 and the sensor 176 using an inter-integrated circuit (I2C) and/or a serial peripheral interface (SPI) communication method. The kernel driver 1210 may transfer the received data to the framework 1202 in the form of an event. That is, the framework 1202 may receive event-type data (e.g., touch data) from the kernel driver 1201. In one embodiment, the framework 1202 may identify coordinates of touch events based on touch data. Also, the framework 1202 may obtain grip area information on the basis of grip-related data, and determine whether or not the touch event is occurred in the edge area on the basis of the coordinates of the touch event. The framework 1202 may correct or update the determined coordinates when the touch event occurs in the edge area and the edge area is a different area from the grip area.

Hereinafter, a detailed process of determining the coordinates of a touch event will be described.

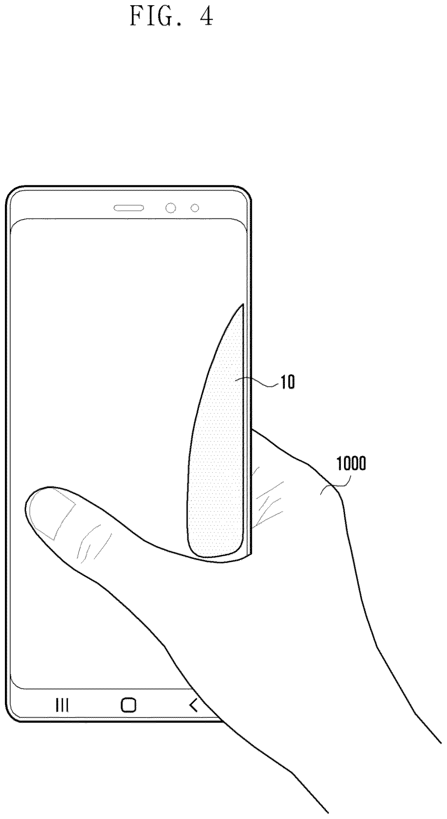

FIG. 4 is a diagram illustrating an operation of identifying a grip area by the electronic device 101 according to various embodiments.

With reference to FIG. 4, the electronic device 101 gripped by a user 1000 is illustrated. When the user 1000 grips the electronic device 101, one area of the electronic device 101 may come into contact with the user 1000. The electronic device 101 may detect information on the contact area of the user 1000. For example, the electronic device 101 may include the grip sensor on each side. In this case, the electronic device 101 may detect information on a contact area touched by the user 1000 using the grip sensor disposed on a side surface of the electronic device gripped by the user 1000. Alternatively, the electronic device 101 may include a temperature sensor on each side of the electronic device 101 and/or a lower portion of the touch panel. When the user 1000 grips the electronic device 101, the temperature information detected by the temperature sensor of the contacted area may be increased by body temperature. Accordingly, the electronic device 101 may detect information on the contact area touched by the user 1000 on the basis of temperature change (e.g., rise in temperature).

Alternatively, when the user 1000 grips one side of the electronic device 101 and operates an area of another side, one area 10 of the touch display 161 on the side gripped by the user 1000 may come into contact with the user 1000. The electronic device 101 may detect information on the contact area touched by the user 1000 using the touch sensor of the touch display 161.

In one embodiment, as illustrated in FIG. 4, when the user 1000 grips the right side of the electronic device 101 using his/her right hand, the electronic device 101 may judge that the user's grip area is the right side.

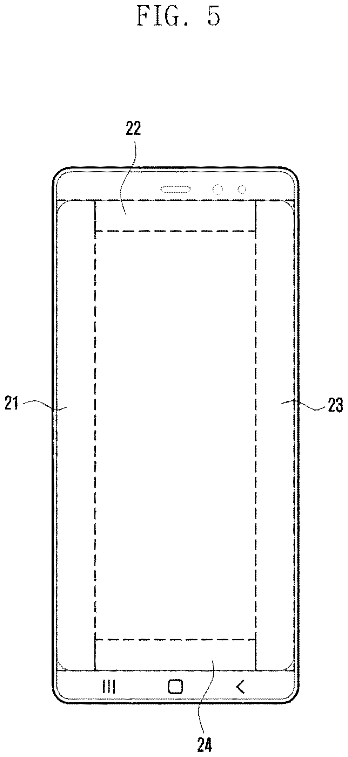

FIG. 5 is a diagram illustrating an edge area according to various embodiments.

With reference to FIG. 5, edge areas 21, 22, 23, 24 set on the touch display 161 are illustrated. The edge areas 21, 22, 23, 24 may be set at each corner area of the touch display 161. That is, a left edge area 21, an upper edge area 22, a right edge area 23, and a lower edge area 24 may be set in the electronic device 101. The edge areas 21, 22, 23, 24 may be areas where an error in touch coordinates may occur when a user grips the electronic device 101 with one hand and operates the electronic device 101. For example, the edge areas 21, 22, 23, 24 may be set according to the area of the touch display 161 and/or a distance between one side and the other side. In one embodiment, the width of the edge areas 21, 22, 23, and 24 may be set to about 1 cm. It will be appreciated that, in various examples, two or more of edge areas 21, 22, 23, 24 may be set. For instance, edge area 21 and edge area 23 may be set on the touch display 161. In another example, edge area 22 and edge area 24 may be set.

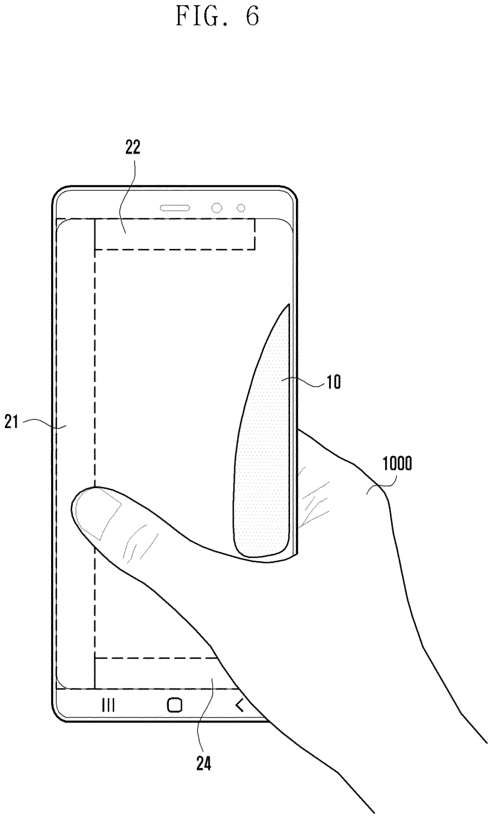

FIG. 6 is a diagram illustrating various embodiments of performing a coordinate correction process.

With reference to FIG. 6, an electronic device operated by one hand is illustrated. In one embodiment, the user 1000 may grip the electronic device 101 with one hand and simultaneously operates the electronic device 101. In this case, the user 1000 may accurately touch most areas of the touch display 161. However, depending on the size of the touch display 161, touches on one or more of the edge areas 21, 22, 24 may become inaccurate. In one embodiment, as illustrated in FIG. 6, in the case where the user 1000 grips the right side of the electronic device 101 and operates the electronic device 101 with a thumb, touch on the left edge area 21, upper edge area 22 and/or lower edge area 24 of the touch display 161 may become inaccurate. Accordingly, when the user 1000 grips the electronic device 101 with one hand and touches the electronic device 101 with his/her thumb, the electronic device 101 of the present disclosure may set the coordinates of the touch event input on one or more of the edge areas 21, 22, 24 of the side(s) other than the one side gripped by the user.

The electronic device 101 may acquire information on the grip area 10 on one side gripped by the user 1000. For example, the information on the grip area 10 may include information on the gripped side, information on the size (e.g., location) of the grip area 10, information on the center point of the grip area 10, and the like. Although the grip area 10 is illustrated on the touch display 161 in FIG. 6, the grip area 10 may include a side area or rear area of the electronic device 101. For example, when the user 1000 grips the right side of the electronic device 101, the grip area 10 may include the right edge area on the touch display 161, and the right side area and right rear area of the electronic device 101. Further, in various examples the grip area 10 may include part of the right edge area and part of another edge area, such as a part of the lower edge area 24.

The electronic device 101 may set edge areas 21, 22, 23, 24 (or a subset thereof) at each corner area and/or along each edge of the touch display 161. The electronic device 101 may receive a touch event on the edge area along with information on the grip area 10 and identify coordinates of the touch event. In addition, the electronic device 101 may judge whether the gripped side and the edge area where the touch event is input are different from each other. When the gripped side and the edge area where the touch event is input are the same side, the electronic device 101 may perform a general coordinate setting process without performing the above-described coordinate setting process. When the gripped side and the edge area 21, 22, 24 where the touch event is input correspond to different sides, the electronic device 101 may correct or update coordinates of the touch event for the edge area.

In one embodiment, when the user 1000 grips the right side of the electronic device 101, the electronic device 101 may not correct/update the coordinates of a touch event input in the right edge area 23. Alternatively, the electronic device 101 may correct/update the coordinates of a touch event input in the left edge area 21, the upper edge area 22, or the lower edge area 24.

Various examples of determining and correcting the coordinates of a touch event are described below.

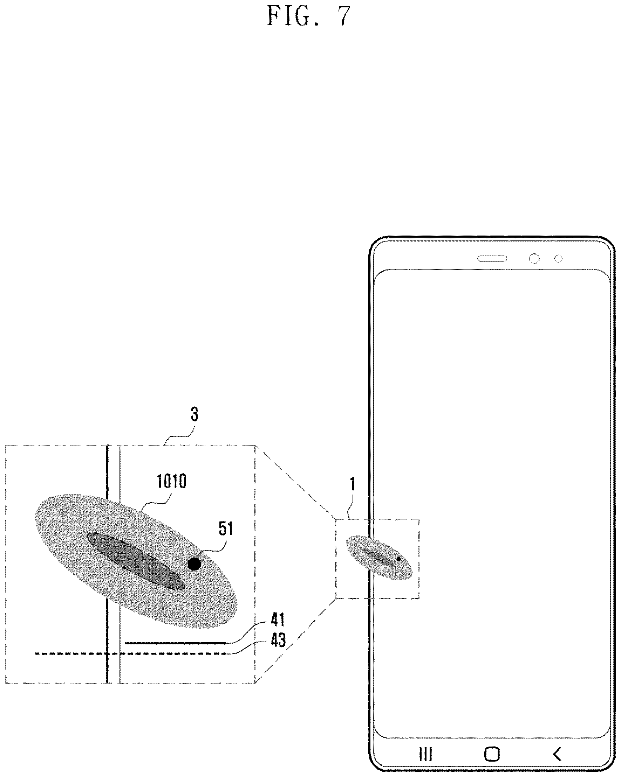

FIG. 7 is a diagram illustrating various embodiments of determining touch coordinates of an edge area.

With reference to FIG. 7, a touch event 1010 input in an edge area is illustrated. When the touch event 1010 is input, the electronic device 101 may identify a central point formed by the major and minor axes of the touch event 1010 as coordinates of the touch event 1010. With reference to the touch area 3 obtained by enlarging the input touch area 1 on the touch display 161, when the touch event 1010 is input in the edge area, the electronic device 101 may not recognize the touch event 1010 of the corner end area of the touch display 161 (e.g., the part shown extending beyond the edge of the touch display 161). Accordingly, the electronic device 101 may normally recognize the length of the minor axis of the touch event 1010, but may not normally recognize the length 41 of the major axis. As illustrated in FIG. 7, the length 41 of the major axis recognized by the electronic device 101 may be shorter than the reference length 43 (e.g., the preset length of the major axis) of the major axis of the touch event 1010. Since the electronic device 101 determines the coordinates of the touch event 1010 on the basis of the length of the major axis 41 identified as short and the length of the minor axis, a point biased to one side from the center point of the touch event 1010 may be determined as the identified coordinate 51 of the touch event 1010. That is, when the user 1000 grips the electronic device with one hand and touches the edge area on the other side, the electronic device 101 may generate an error in recognizing a point different from the point intended by the user as the identified coordinates 51 of the touch event 1010. The electronic device 101 of the disclosure may correct, or update, coordinates of a touch event with respect to an edge area of a side other than the gripped side. Alternatively, the electronic device 101 may set the coordinates on the basis of the recognized length 41 of the major axis and the reference length 43 of the major axis without performing the process of identifying the coordinates.

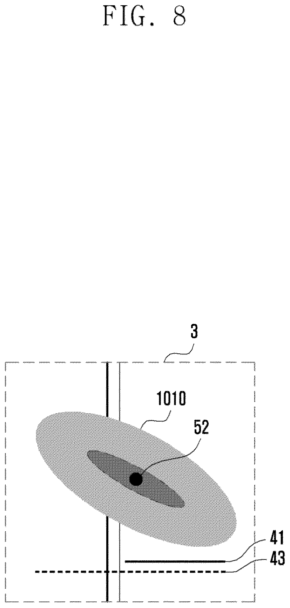

FIG. 8 is a diagram illustrating various embodiments of correcting touch coordinates of an edge area.

With reference to FIG. 8, a diagram in which the determined coordinates of the touch event 1010 are corrected is illustrated. The electronic device 101 may correct coordinates of the touch event 1010 on the basis of information related to the touch event 1010. For example, information related to the touch event 1010 may include a reference length of a major axis of the touch event 1010 and a reference length of a minor axis of the touch event 1010. The electronic device 101 may set the reference length of the major axis with an average length of the major axis of touch event 1010 detected in areas other than the edge area, the length of the major axis of the touch event 1010 detected in other area immediately before the touch event 1010 is detected in the edge area, or the length of the major axis set by the user (or with a combination of these examples). Also, the electronic device 101 may set the reference length of the minor axis in a manner similar to the method for setting the reference length of the major axis.

When the touch event 1010 is input in the edge area of one side, the electronic device 101 may determine whether the side where the touch event 1010 occurs is different from the gripped side. When the side on which the touch event 1010 occurs is different from the gripped side, the electronic device 101 may correct or update the determined coordinates of the touch event 1010. For example, the electronic device 101 may identify the information of the major axis of a touch event, and replace the major axis of a touch event with the preset major axis based on the identified information of the major axis of a touch event. For example, the information of the major axis may include the information on one end of the major axis and/or the information on length. The electronic device 101 may replace the length 41 of the major axis of the detected touch event 1010 with the reference length 43 of the major axis. Also, in another example the electronic device 101 may correct or update coordinates of the major axis direction of the touch event 1010 on the basis of the reference length 43 of the major axis. In another example, the electronic device 101 may replace the length of the major axis on the basis of one end of the major axis located at the farthest point from the corner area of the touch display 161.

In one embodiment, when the user grips the right side of the electronic device 101 and touches the edge area of the left side, the electronic device 101 may identify the coordinates of the touch event 1010. The electronic device 101 may replace the length 41 of the major axis of the identified touch event 1010 with the reference length 43 of the major axis. In this case, the electronic device 101 may replace the identified length 41 of the major axis on the basis of the right end of the major axis with the reference length 43 of the major axis. The electronic device 101 may correct or update the coordinates of the touch event 1010 on the basis of the replaced reference length 43 of the major axis and the identified length of the minor axis. Accordingly, the electronic device 101 may recognize the center point of the touch event 1010 as the corrected (or updated) coordinates 52 even for the touch event 1010 on the edge area.

In one embodiment, the electronic device 101 may consider the ratio of the length of the major axis to the length of the minor axis when determining whether to correct the coordinates of the touch event 1010. The electronic device 101 may obtain a ratio of the length of the major axis to the length of the minor axis. Further, the electronic device 101 may perform a process of correcting (or updating, determining etc.) the coordinates of the touch event 1010, e.g. to replace the identified length 41 of the major axis with the reference length 43 of the major axis, when the length of the major axis is greater than or equal to a preset ratio based on the length of the minor axis. Accordingly, the electronic device 101 may perform the coordinate correction process (e.g. the coordinate updating process) based on the ratio of the length of the major axis to the length of the minor axis together with the relationship between the gripped side and the side of the edge area where the touch event 1010 is occurred. In one embodiment, the electronic device 101 may perform the coordinate correction process in consideration of the gradient of the area of the touch event 1010. Alternatively, the electronic device 101 may set the coordinates based on the recognized length 41 of the major axis and the reference length 43 of the major axis without performing the coordinate correction process.

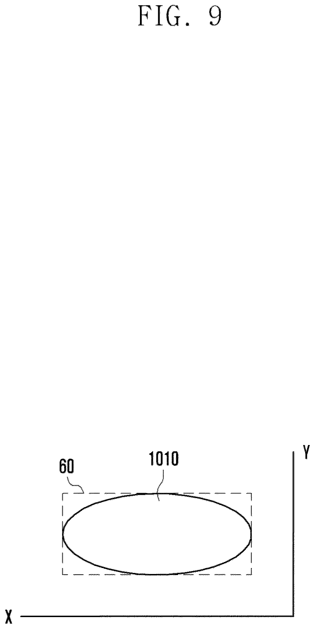

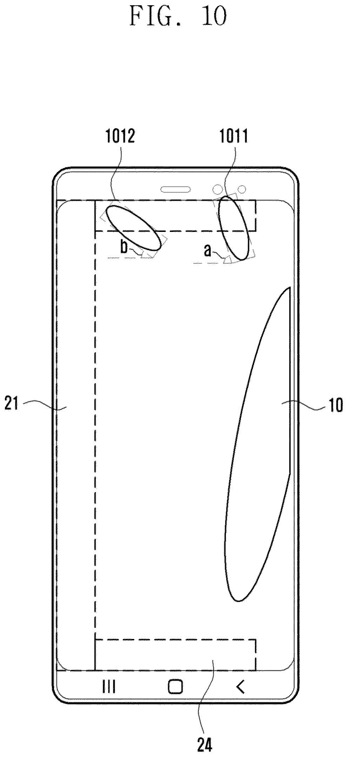

FIG. 9 is a diagram illustrating a touch area according to various embodiments. FIG. 10 is a diagram illustrating various types of touch areas that vary on the basis of a distance from a grip area according to various embodiments. Description will be made with reference to FIGS. 9 and 10 together.

With reference to FIG. 9, an example of a normal touch event is illustrated. For example, the touch event 1010 is an event generated by the thumb of the user 1000 and may be an event generated in a long shape along one axis. The area 60 of the touch event may be an area formed with a major axis and a minor axis. In one embodiment, the touch event 1010 may be an event that is long in the X axis and short in the Y axis. In this case, the X axis may be a major axis and the Y axis may be a minor axis (e.g., the major axis is in the direction of the X axis and the minor axis is in the direction of the Y axis). If the gradient of the touch event 1010 is identified on the basis of the X axis and the major axis, the gradient of the touch event 1010 illustrated in FIG. 9 may be 0 degrees. Alternatively, when the gradient of the touch event 1010 is judged on the basis of the X axis and the minor axis, the gradient of the touch event 1010 illustrated in FIG. 9 may be 90 degrees. In this document, for convenience of explanation, the gradient of the touch event 1010 will be judged as the gradient of the X axis and the major axis (e.g., the gradient of a touch event or the gradient of the major axis may be given relative to the direction of the X axis, which may, for example, be considered a horizontal direction). Information related to a touch event may include a gradient of the touch event.

As illustrated in FIG. 10, the grip area 10 is formed on the right side of the electronic device 101, and touch events 1011 and 1012 may occur in the upper edge area 22. Among the first touch event 1011 and the second touch event 1012, the first touch event 1011 may be an event that occurs at a distance close to the grip area 10, and the second touch event 1012 may be an event that occurs at a distance far from the grip area 10. For example, the electronic device 101 may have a vertically long shape. Since the grip area 10 is formed on the right side of the electronic device 101, the first touch event 1011 may be a normal touch and the second touch event 1012 may be an abnormal touch.

Accordingly, the electronic device 101 may skip correcting (e.g., not perform updating or determining of) the coordinates of the first touch event 1011, and may correct (e.g., perform updating or determining of) the coordinates of the second touch event 1012. The electronic device 101 may identify the gradient of the first touch event 1011 (e.g. the gradient of the major axis of the first touch event 1011) as a degree 'a' (e.g. 'a' degrees corresponds to the angle between the direction of the X axis indicated in Figure 9 (such as a horizontal direction) and the direction (e.g., orientation) of the major axis of the touch event 1011) and the gradient of the second touch event 1012 (e.g., the gradient of the major axis of the second touch event 1012) as a degree 'b' (e.g., 'b' degrees corresponds to the angle between the direction of the X axis indicated in Figure 9 (such as a horizontal direction) and the direction (e.g., orientation) of the major axis of the touch event 1012). In one embodiment, the 'a' may be 80 degrees and the 'b' may be 30 degrees. In the case of the right grip area 10 and the upper edge area 22, the electronic device 101 may set the gradient of the touch event for correcting coordinates between 0 degrees and 50 degrees. Accordingly, the electronic device 101 may correct, or update, the coordinates of the second touch event 1012 without correcting, or updating, the coordinates of the first touch event 1011. In other words, the set gradient may be used to identify whether a touch event is an abnormal touch event: if the angle between the direction of the X axis indicated in FIG. 9 (such as a horizontal direction) and the direction (e.g., orientation) of the major axis of the touch event is within the set gradient, then the touch even is determined as an abnormal touch event and the correcting/updating of the coordinates of the touch event may be performed.

Even if the electronic device 101 has a vertically long shape and the grip area 10 is formed on the right side of the electronic device 101, the gradient of the touch event may vary depending on the edge area where the touch event occurs. Accordingly, the electronic device 101 may set the angle of the touch event for correcting coordinates differently according to each edge area. In one embodiment, when the grip area 10 is the right area of the electronic device 101, the range of gradient for correcting the coordinates of the upper edge area 22 may be set to 0 degrees to 50 degrees, the range of gradient for correcting the coordinates of the lower edge area 24 may be set to 0 degrees to -50 degrees, and/or the range of gradient for correcting the coordinates of the left edge area 21 may be set to -45 degrees to 45 degrees. The above example is non-limiting, and the electronic device 101 may set different ranges of gradient depending on the shape of the electronic device 101, the size of the touch display 161, the location of the grip area, the location of the edge area, and/or the like. It will be appreciated that, in various examples where the gradient of a touch event determines whether or not the coordinate correction process is performed (i.e., performing the coordinate correction process is based on the gradient of the touch event), it may not be necessary to identify lengths of the major axis and/or minor axis of the touch event, but instead sufficient to identify a direction (e.g. an orientation) of the major axis or the minor axis (e.g., depending on whether the gradient is calculated based on the major axis or the minor axis, respectively). In other words, determining the gradient may not require knowledge of the length of the major or minor axis, but may instead be based on an identification of the direction of the major or minor axis. It will be understood that, if the length of the major axis is not identified, setting or correcting the coordinate value by replacing the length of the major axis does not require identification of the length of the major axis but instead may include setting the length of the major axis as a preset length or a reference length.

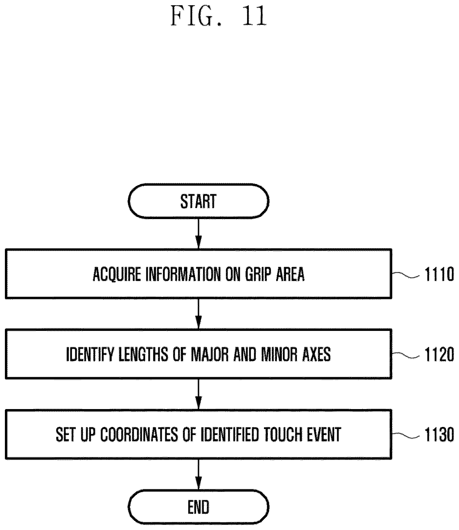

FIG. 11 is a flowchart illustrating a method for controlling an electronic device according to various embodiments.

With reference to FIG. 11, the electronic device 101 may acquire grip area information 1110. For example, the electronic device 101 may acquire information of a grip area where one side is gripped on the basis of grip information detected using a grip sensor, information on temperature change of a grip area detected using a temperature sensor, and/or information on a touched area detected using a touch sensor.

The electronic device 101 may determine lengths of major and minor axes of the detected touch event 1120. Along with acquisition of the grip area information, the electronic device 101 may detect a touch event in an edge area of another side of the touch display 161 except for the edge area of one side. In addition, the electronic device 101 may identify a major axis and a minor axis in the area of the detected touch event, and identify the length of the major axis and the length of the minor axis. In various examples of the disclosure, instead of identifying lengths of the major and minor axes, the electronic device 101 may identify a direction (or orientation, or gradient etc.) of the major axis and/or the minor axis. For example, this may be with respect to an X axis or a Y axis as defined in Figure 9, such as may correspond to a horizontal direction, a vertical direction, a direction of the long axis (e.g., the longest side) of the touch display 161 or electronic device 101 itself or the direction of the short axis (e.g. the shortest side) of the touch display 161 or electronic device 101 itself.

The electronic device 101 may set (e.g. determine, correct, replace etc.) the coordinates of the identified touch event 1130. The electronic device 101 may set coordinates of the identified touch event on the basis of information related to the touch event. For example, information related to a touch event may include the identified length of a major axis of the touch event and/or the identified length of a minor axis of the touch event. The electronic device 101 may set the coordinates of the identified touch event when the length of the major axis is greater than or equal to a preset ratio with respect to the length of the minor axis. Alternatively, the information related to the touch event may include the gradient of an area formed by the major and minor axes of the detected touch event, the gradient of the major axis of the touch event, or the gradient of the minor axis of the touch event (e.g., where said gradients, or directions as they may also be regarded, are identified in step 1120 as indicated for various examples of the disclosure above). The electronic device 101 may set the coordinates of the identified touch event when the gradient is within a preset angular range. A gradient for correcting or updating coordinates of a touch event may be set to a different range on a basis of grip area information and a location of an edge area where a touch event is detected.

For example, the electronic device 101 may replace the length of the major axis of the detected touch event with a reference length of the major axis, and correct the coordinates of the major axis direction of the touch event on the basis of the reference length of the major axis. The electronic device 101 may replace the length of the major axis of the detected touch event with a preset length of the major axis on the basis of an end of the major axis farthest from the corner area of the touch display 161. In one embodiment, the reference length of the major axis is an average length of the major axis of the touch event detected in an area other than the edge area, a length of the major axis of the touch event detected in other area immediately before the touch event is detected in the edge area, or a length of the major axis set by the user.

Alternatively, the electronic device 101 may identify the central point of the area formed by the major axis and the minor axis as the coordinates of the detected touch event. The electronic device 101 may correct the coordinates of the identified touch event on the basis of a preset length of the major axis through the above process. The electronic device 101 may set the corrected coordinates of the touch event as the coordinates of the detected touch event.

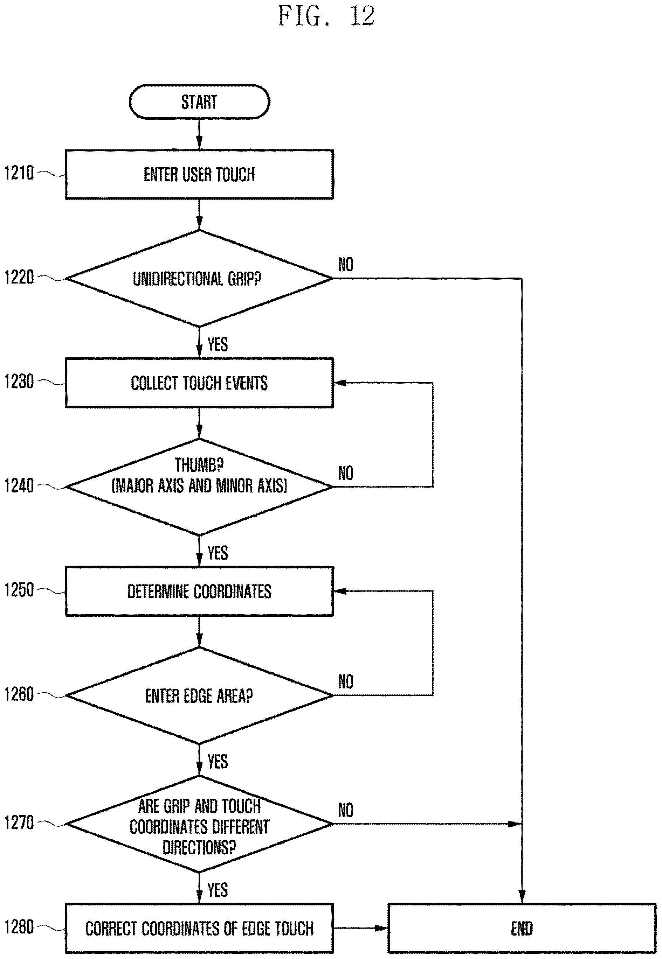

FIG. 12 is a flowchart illustrating a process of correcting (or updating, determining, setting etc.) touch coordinates according to various embodiments. The order in FIG. 12 may be changed and some processes may be omitted, such that the present disclosure should be considered to include, as separate examples, each and every combination of the operations shown in FIG. 12.

With reference to FIG. 12, the electronic device 101 may be touched (or gripped) by a user 1210. When the electronic device 101 detects the user's grip, it may judge whether it is a unidirectional grip 1220. For example, the electronic device 101 may judge, or determine, whether the gripped area is a grip on one side or a grip on a plurality of sides. In various examples, when the judged grip is a grip on a plurality of sides, the electronic device 101 may skip the coordinate correction process of the touch event.

When the determined grip is a unidirectional grip (e.g., a grip on one side of the electronic device), the electronic device 101 may collect the touch event(s) 1230 and judge (e.g., determine) whether the touch event is caused by a thumb 1240. The electronic device of the disclosure is to correct (or update etc.) a coordinate error (e.g. an inaccuracy in coordinate calculation) of a touch event when the electronic device is gripped and operated with one hand. Therefore, the coordinate correction process may be skipped when it is judged that the operation is not performed by the thumb. In one embodiment, the electronic device 101 may judge whether the touch event is caused by the thumb on the basis of the size of the area formed by the lengths of the major and minor axes of the touch event. Alternatively, the electronic device 101 may judge whether the touch event is caused by the thumb on the basis of the ratio of the length of the major axis to the length of the minor axis. In another example, the electronic device 101 may judge whether the touch event is caused by the thumb on the basis of a gradient of the touch event, the major axis and/or the minor axis (e.g. such as may be identified as described elsewhere herein). When it is judged that the collected touch event is a thumb event, the electronic device 101 may identify the coordinates 1250 and judge, or determine, whether the touch event occurs in the edge area 1260. When the touch event does not occur in the edge area, the electronic device 101 may analyze the next input touch event. In one embodiment, when the touch event does not occur in the edge area, the electronic device 101 may identify the length of the major axis of the touch event and set a reference length of the major axis on the basis of the length of the major axis of the identified touch event.

If the electronic device 101 judges, or determines, that the touch event occurs in the edge area, it may judge whether the side of the grip area and the side of the edge area where the touch event occurs are in different directions 1270. When the side of the grip area and the side of the edge area where the touch event occurs are in the same direction, the electronic device 101 may not perform the coordinate correction process. When the side of the grip area and the side of the edge area where the touch event occurs are in different directions, the electronic device 101 may correct the coordinates of the identified touch event 1280. The electronic device 101 may correct the coordinates by replacing the length of the major axis of the identified touch event with the reference length of the major axis.

In other examples, the electronic device 101 may judge, or determine, whether the touch event occurs in the edge area on the basis of the area of the touch event without the coordinate identifying process 1260. When the electronic device 101 judges that the touch event occurs in the edge area, it may judge whether the side of the grip area and the side of the edge area where the touch event occurs are in different directions 1270. When the side of the grip area and the side of the edge area where the touch event occurs are in the same direction, the electronic device 101 may not perform the coordinate correction process. When the side of the grip area and the side of the edge area where the touch event occurs are in different directions, the electronic device 101 may set (e.g. correct) the coordinates of the identified touch event 1280. The electronic device 101 may set coordinates by replacing the length of the major axis of the identified touch event with the reference length of the major axis.

There now follows a set of numbered paragraphs which define various examples, embodiments etc. according to the disclosure:

Paragraph 1. An electronic device, comprising: a touch display; a sensor; and at least one processor configured to: acquire, using the sensor, information on a grip area corresponding to a side of the electronic device which is gripped, identify information of a major axis of a detected touch event when the touch event is detected in an edge area of a side of the electronic device other than the gripped side among a plurality of edge areas set for the touch display, and set coordinates of the detected touch event based on the information of the major axis of the detected touch event, and a preset length of the major axis.

Paragraph 2. The electronic device of Paragraph 1, wherein the processor is configured to: identify a length of the major axis comprised in the information of the major axis and a length of a minor axis of the detected touch event when the touch event is detected in the edge area of the side other than the gripped side, and set the coordinates of the detected touch event based on the length of the major axis, the length of the minor axis and the preset length; or identify a gradient of the detected touch event, and when the determined gradient is within a preset angular range, set the coordinates of the detected touch event based on the preset length of the major axis.

Paragraph 3. The electronic device of Paragraph 2, wherein the at least one processor is configured to: set the coordinates of the detected touch event based on the preset length of the major axis when a ratio of the length of the major axis to the length of the minor axis is greater than or equal to a preset ratio.

Paragraph 4. The electronic device of Paragraph 3, wherein the gradient is set to a different range based on the information on the grip area and a location of the edge area where the touch event is detected.

Paragraph 5. The electronic device of any of Paragraphs 2 to 4, wherein the at least one processor is configured to: set the length of the major axis of the detected touch event as the preset length of the major axis, and set the coordinates in a direction of the major axis of the touch event based on the preset length of the major axis.

Paragraph 6. The electronic device of any of Paragraphs 2 to 5, wherein the at least one processor is configured to: identify the length of the major axis of the detected touch event based on an end of the major axis located at the farthest point from the side of the electronic device corresponding to the edge area.

Paragraph 7. The electronic device of any of Paragraphs 1 to 6, wherein the preset length includes an average length of the major axis of at least one other touch event detected in one or more areas other than the edge area, a length of a major axis of another touch event detected in an area, other than the edge area, immediately before the touch event is detected in the edge area, or a length set by a user.

Paragraph 8. The electronic device of any of Paragraphs 1 to 7, wherein the at least one processor is configured to: receive a plurality of thumb touch events, acquire an average length of the major axes of each of the thumb touch events, and set the acquired average length of the major axis to the preset length of the major axis.

Paragraph 9. The electronic device of Paragraph 1, wherein the at least one processor is configured to: identify a central point of an area formed by the major axis and a minor axis of the detected touch event as the coordinates of the detected touch event, update the identified coordinates of the detected touch event based on the preset length of the major axis, and set the corrected coordinates of the touch event as the coordinates of the detected touch event.

Paragraph 10. The electronic device of any of Paragraphs 1 to 9, wherein the sensor includes at least one of a grip sensor, a temperature sensor, and a touch sensor, and wherein the at least one processor is configured to: acquire the information on the grip area based on at least one of grip information detected by the grip sensor, temperature information of the touch display detected by the temperature sensor, and information on an area touched on the touch display detected by the touch sensor.

Paragraph 11. A method for controlling an electronic device, comprising:
acquiring information on a grip area corresponding to a side of the electronic device which is gripped, identifying information of a major axis of a detected touch event when the touch event is detected in an edge area of a side one of the electronic device other than the gripped side among a plurality of edge areas set for a touch display, and setting coordinates of the detected touch event based on the information of the major axis of the detected touch event, and a preset length of the major axis.

Paragraph 12. The method of Paragraph 11, further comprising: identifying a length of the major axis and a length of a minor axis of the detected touch event when the touch event is detected in the edge area of the side other than the gripped side, wherein setting the coordinates of the detected touch event comprises setting the coordinates of the detected touch event based on the length of the major axis, the length of the minor axis and the preset length; or identifying a gradient of the detected touch event, wherein setting the coordinates of the detected touch event comprises, when the determined gradient is within a preset angular range, setting the coordinates of the detected touch event based on the preset length of the major axis.

Paragraph 13. The method of Paragraph 12, wherein setting the coordinates of the detected touch event comprises setting the coordinates of the detected touch event based on the preset length of the major axis when a ratio of the length of the major axis to the length of the minor axis is greater than or equal to a preset ratio.

Paragraph 14. The method of Paragraph 12, wherein the gradient is set to a different range based on the information on the grip area and a location of the edge area where the touch event is detected.

Paragraph 15. The method of claim any of Paragraphs 12 to 14, wherein setting the coordinates of the detected touch event comprises setting the length of the major axis of the detected touch event to the preset length of the major axis, and setting the coordinates in a direction of the major axis of the touch event based on the preset length of the major axis.

Paragraph 16. An electronic device, comprising: a touch display; a sensor; and at least one processor, wherein the at least one processor acquires information on a grip area in which one side of the electronic device is gripped using the sensor, the at least one processor identifies lengths of major axis and minor axis of a detected touch event when a touch event is detected in an edge area of another side except for the edge area of the one side among edge areas set in the touch display along with the acquisition of the information on the grip area, and the at least one processor sets coordinates of the detected touch event on a basis of the lengths of the major and minor axes of the detected touch event, and a preset length of the major axis.

Paragraph 17. The electronic device of Paragraph 16, wherein the at least one processor sets the coordinates of the detected touch event on a basis of the preset length of the major axis when the length of the major axis is greater than or equal to a preset ratio with respect to the length of the minor axis.

Paragraph 18. The electronic device of Paragraph 16, wherein the at least one processor identifies a gradient of an area formed by the major and minor axes of the detected touch event, and when the determined gradient is within a preset angular range, the at least one processor sets the coordinates of the detected touch event on a basis of the preset length of the major axis.

Paragraph 19. The electronic device of Paragraph 18, wherein the gradient is set to a different range on a basis of the information on the grip area and a location of the edge area where the touch event is detected.

Paragraph 20. The electronic device of Paragraph 1, wherein the at least one processor replaces the length of the major axis of the detected touch event with the preset length of the major axis, and sets coordinates in a major axis direction of the touch event on a basis of the preset length of the major axis.

Paragraph 21. The electronic device of Paragraph 20, wherein the at least one processor replaces the length of the major axis of the detected touch event with the preset length of the major axis on a basis of one end of the major axis of the detected touch event located at the farthest point from a corner area of the touch display, and sets the coordinates in the major axis direction of the touch event.

Paragraph 22. The electronic device of Paragraph 20, wherein the preset length of the major axis includes an average length of the major axis of the touch event detected in an area other than the edge area, the length of the major axis of the touch event detected in the other area immediately before the touch event is detected in the edge area, or the length of the major axis set by a user.

Paragraph 23. The electronic device of Paragraph 16, wherein the at least one processor receives a thumb touch event a plurality of times, acquires an average length of the major axes of the thumb touch event input the plurality of times, and sets the acquired average length of the major axis to the preset length of the major axis.

Paragraph 24. The electronic device of Paragraph 16, wherein the at least one processor identifies a central point of an area formed by the major axis and the minor axis as the coordinates of the detected touch event, corrects the identifies coordinates of the touch event on a basis of the preset length of the major axis, and sets the corrected coordinates of the touch event to the coordinates of the detected touch event.

Paragraph 25. The electronic device of Paragraph 16, wherein the sensor includes at least one of a grip sensor, a temperature sensor, and a touch sensor, the at least one processor acquires the information on the grip area on a basis of at least one of grip information detected by the sensor, temperature information of the touch display, and information on an area touched on the touch display.

Paragraph 26. A method for controlling an electronic device, comprising:
acquiring information on a grip area in which one side of the electronic device is gripped; identifying lengths of major axis and minor axis of a detected touch event when a touch event is detected in an edge area of another side except for the edge area of the one side among edge areas set in a touch display along with the acquisition of the information on the grip area; and setting coordinates of the detected touch event on a basis of the lengths of the major and minor axes of the detected touch event, and a preset length of the major axis.

Paragraph 27. The method of Paragraph 26, wherein in the setting the coordinates of the detected touch event, the coordinates of the detected touch event is set on a basis of the preset length of the major axis when the length of the major axis is greater than or equal to a preset ratio with respect to the length of the minor axis.

Paragraph 28. The method of Paragraph 26, further comprising determining a gradient of an area formed by the major axis and minor axis of the detected touch event, wherein in the setting the coordinates of the detected touch event, the coordinates of the detected touch event is set on a basis of the preset length of the major axis when the identified gradient is within a preset angular range.

Paragraph 29. The method of Paragraph 28, wherein the gradient is set to a different range on a basis of the information on the grip area and a location of the edge area where the touch event is detected.

Paragraph 30. The method of Paragraph 26, wherein in the setting the coordinates of the detected touch event, the length of the major axis of the detected touch event is replaced with the preset length of the major axis, and coordinates in a major axis direction of the touch event is set on a basis of the preset length of the major axis.

According to various embodiments described above, the electronic device 101 may correct a coordinate error of an edge area caused by a one-handed operation with accurate coordinates.

The effects of this document are not limited to the effects mentioned above, and other effects not mentioned above will be clearly understood by those skilled in the art from the above description.

## Claims

1. An electronic device, comprising:
a touch display;
a sensor; and
at least one processor configured to:
acquire, using the sensor, information on a grip area corresponding to a side of the electronic device which is gripped,
identify information of a major axis of a detected touch event when the touch event is detected in an edge area of a side of the electronic device other than the gripped side among a plurality of edge areas set for the touch display, and
set coordinates of the detected touch event based on the information of the major axis of the detected touch event, and a preset length of the major axis.

2. The electronic device of claim 1, wherein the processor is configured to:
identify a length of the major axis comprised in the information of the major axis and a length of a minor axis of the detected touch event when the touch event is detected in the edge area of the side other than the gripped side, and set the coordinates of the detected touch event based on the length of the major axis, the length of the minor axis and the preset length; or
identify a gradient of the detected touch event based on the information of the major axis, and when the determined gradient is within a preset angular range, set the coordinates of the detected touch event based on the preset length of the major axis.

3. The electronic device of claim 2, wherein the at least one processor is configured to:
set the coordinates of the detected touch event based on the preset length of the major axis when a ratio of the length of the major axis to the length of the minor axis is greater than or equal to a preset ratio.

4. The electronic device of claim 2, wherein the gradient is set to a different range based on the information on the grip area and a location of the edge area where the touch event is detected.

5. The electronic device of claim 2, wherein the at least one processor is configured to:
set the length of the major axis of the detected touch event as the preset length of the major axis, and
set the coordinates in a direction of the major axis of the touch event based on the preset length of the major axis.

6. The electronic device of claim 2, wherein the at least one processor is configured to:
identify the length of the major axis of the detected touch event based on an end of the major axis located at the farthest point from the side of the electronic device corresponding to the edge area.

7. The electronic device of claim 1, wherein the preset length includes an average length of the major axis of at least one other touch event detected in one or more areas other than the edge area, a length of a major axis of another touch event detected in an area, other than the edge area, immediately before the touch event is detected in the edge area, or a length set by a user.

8. The electronic device of claim 1, wherein the at least one processor is configured to:
receive a plurality of thumb touch events,
acquire an average length of the major axes of each of the thumb touch events, and
set the acquired average length of the major axis to the preset length of the major axis.

9. The electronic device of claim 1, wherein the at least one processor is configured to:
identify a central point of an area formed by the major axis and a minor axis of the detected touch event as the coordinates of the detected touch event,
update the identified coordinates of the detected touch event based on the preset length of the major axis, and
set the corrected coordinates of the touch event as the coordinates of the detected touch event.

10. The electronic device of claim 1, wherein the sensor includes at least one of a grip sensor, a temperature sensor, and a touch sensor, and wherein the at least one processor is configured to:
acquire the information on the grip area based on at least one of grip information detected by the grip sensor, temperature information of the touch display detected by the temperature sensor, and information on an area touched on the touch display detected by the touch sensor.

11. A method for controlling an electronic device, comprising:
acquiring information on a grip area corresponding to a side of the electronic device which is gripped;
identifying information of a major axis of a detected touch event when the touch event is detected in an edge area of a side of the electronic device other than the gripped side among a plurality of edge areas set for a touch display; and
setting coordinates of the detected touch event based on the information of the major axis of the detected touch event, and a preset length of the major axis.

12. The method of claim 11, further comprising:
identifying a length of the major axis comprised in the information of the major axis and a length of a minor axis of the detected touch event when the touch event is detected in the edge area of the side other than the gripped side, wherein setting the coordinates of the detected touch event comprises setting the coordinates of the detected touch event based on the length of the major axis, the length of the minor axis and the preset length;
or
identifying a gradient of the detected touch event based on the information of the major axis, wherein setting the coordinates of the detected touch event comprises, when the determined gradient is within a preset angular range, setting the coordinates of the detected touch event based on the preset length of the major axis.

13. The method of claim 12, wherein setting the coordinates of the detected touch event comprises setting the coordinates of the detected touch event based on the preset length of the major axis when a ratio of the length of the major axis to the length of the minor axis is greater than or equal to a preset ratio.

14. The method of claim 12, wherein the gradient is set to a different range based on the information on the grip area and a location of the edge area where the touch event is detected.

15. The method of claim 12, wherein setting the coordinates of the detected touch event comprises setting the length of the major axis of the detected touch event to the preset length of the major axis, and setting the coordinates in a direction of the major axis of the touch event based on the preset length of the major axis.
